# EUROPÄISCHE PATENTSCHRIFT

(11) **EP 0 283 642 B1**
(45) Veröffentlichungstag und Bekanntmachung des Hinweises auf die Patenterteilung: **05.05.1993**
(21) Anmeldenummer: 88100444.4
(22) Anmeldetag: 14.01.1988
(51) Int. Cl.: A47J 43/044, A47J 43/08

(54) **Handmixgerät**
Electric hand mixer
Mixer à main électrique

(30) Priorität: 24.03.1987 DE 3709573
(43) Veröffentlichungstag der Anmeldung: 28.09.1988
(73) Patentinhaber: Braun Aktiengesellschaft, Frankfurt am Main (DE)
(72) Erfinder: Rebordosa, Antonio, 08240 Manresa (Barcelona) (ES)

(56) Entgegenhaltungen:
- CH-A- 420 514
- DE-B- 1 091 719
- FR-A- 1 087 875
- FR-A- 2 233 019

## Beschreibung

Die Erfindung bezieht sich auf einen von Hand geführten Stabmixer mit einem im wesentlichen zylindrisch ausgeführten, aus einem rohrförmigen Gerätegehäuseunterteil, einem Griffteil und einem Deckel zusammengesetzten Gehäuse, in dem zwischen einem unteren und einem oberen Lagerteil ein zum Antrieb eines Arbeitswerkzeuges dienender Elektromotor eingesetzt ist, der über im Griffteil ausgebildete elektrische Bau- bzw. Schaltteile steuerbar ist, wobei das obere Lagerteil dem Griffteil und das untere Lagerteil dem Arbeitswerkzeug zugewandt ist.

Ein derartiges als Stabmixer ausgebildetes Handrührgerät ist bereits aus der FR-2 233 019 A1 bekannt. Dieser Stabmixer besteht aus zwei in Längsachse des Stabmixers verlaufenden, das eigentliche Gerätegehäuse bildenden Gerätegehäuseteilhälften, in denen die einzelnen elektrischen Bauteile sowie Lagerelemente für den elektrischen Motor aufgenommen sind. Die einzelnen Bauteile innerhalb des Gerätegehäuses sind über Schraubelemente fest verbunden. Zwar werden die beiden Gerätegehäuseteilhälften bei ihrem Zusammenfügen über Rast- und/oder Sperrelemente miteinander verbunden, diese Verbindung dient aber nur als Montagehilfe, da der feste Zusammenschluß erst durch die die beiden Gerätegehäuseteile miteinander verbindenden vier Schrauben, hergestellt wird. Die Befestigung der inneren Bauteile und der beiden Gerätegehäuseteile durch Schrauben ist aber sehr aufwendig, teuer und zeitraubend. Zum anderen erfordert die Teilung des Gerätegehäuses in Längsrichtung des Stabmixers eine aufwendige Montage, da die inneren Bauteile in eine offene Halbschale gelegt werden müssen, so daß diese daher bis zur Bildung eines verschlossenen Gehäuses keinen festen Halt haben.

Weiterhin wird in der DE-C-3 427 936 ein kastenförmiges Gehäuse für ein elektrisches Gerät beschrieben, bei dem zwei Gehäuseteile durch eine lösbare schraubenlose Befestigung, nämlich eine Schnappverbindung, miteinander verbindbar sind. Die Schnappverbindung selbst wird zusätzlich noch durch einen Gummipuffer gegen ein unbeabsichtigtes Lösen gesichert. Der Gummipuffer ist weiterhin über ein Verlängerungsteil mit einem Gummifuß verbunden, der dann als Standfläche für das Gehäuse dient.

Demgegenüber liegt der Erfindung die Aufgabe zugrunde, mehrere Gerätegehäuseteile sowie die einzelnen mechanischen und elektrischen Bauteile derart im Stabmixer auszubilden und anzuordnen, daß diese ohne zusätzliche Befestigungselemente, beispielsweise Schrauben oder Stifte, im Gerätegehäuse fixiert werden können, so daß dadurch die Montage vereinfacht wird.

Diese Aufgabe wird erfindungsgemäß dadurch gelöst, daß das Gerätegehäuseunterteil, der Elektromotor, das obere Lagerteil, das Griffteil und der Deckel jeweils mit Rastelementen versehen sind, daß das Gerätegehäuse, ausgehend vom Gerätegehäuseunterteil, schrittweise aus den vorgenannten Teilen zusammengefügt wird, wobei im zusammengefügten Zustand der einzelnen Teile jeweils ein Rastelement des vorangehenden Teils mit einem Rastelement des nachfolgenden Teils eine Verbindung der betreffenden Teile herstellt, und daß das obere Lagerteil mittels der an ihm ausgebildeten Rastelemente eine Verbindung zum Gerätegehäuseunterteil, zum Elektromotor, zum Griffteil und zum Deckel herstellt. Hierdurch wird eine einfache, ohne zusäzliche Befestigungsmittel auskommende schnelle Montage ermöglicht, die zudem noch kostengünstig und zeitsparend ist. Durch die Rastelemente wird zusätzlich zu der formschlüssigen Verbindung zwischen Gerätegehäuseteil und Griffteil eine weitere axiale Sicherung und Zentrierung des Griffteils über das Lagerteil mit dem Gerätegehäuseteil geschaffen. Somit kann man vollständig auf Schraubverbindungen, Stifte, Schraubenbolzen oder ähnliche Befestigungsmittel verzichten, da die an den einzelnen Bauteilen fest angeordneten Rast- und Führungselemente zur Sicherung bzw. zur Fixierung dieser Teile in dem Gerätegehäuseteil dienen. Durch dieses einzigartige Stecksystem ist der Handmixer besonders schnell montierbar.

Eine Demontage des Gerätes ist nur durch Fachpersonal möglich, da nur dieses darüber informiert ist, wo die ersten Handgriffe zur Demontage des Gerätes angesetzt werden müssen. Gleichzeitig ist zusätzlich das Lagerteil mit dem Griffteil an mindestens einer Stelle über mindestens ein Rastelement in axialer Richtung gesichert. Durch den Wegfall vieler üblicher Schraubverbindungen läßt sich die Montage des Gerätes in kürzester Zeit vornehmen, wodurch eine erhebliche Verbilligung gegenüber den bekannten Montageverfahren erreicht wird. Die einzelnen Rastelemente können als Hakenteile, Vorsprünge bzw. Nasenteile ausgebildet sein, die in im Gerätegehäuseteil vorgesehenen Aussparungen einrasten. Um eine Demontage der einzelnen Bauteile bzw. der Gerätegehäuseteile vornehmen zu können, sind die Rastelemente derart ausgebildet, daß sie aus ihren Rastpositionen verschiebbar sind, um somit die Verbindung zwischen den einzelnen Bauteilen aufzuheben, wenn dieses erforderlich wird.

Dabei wird das Lagerteil dadurch ortsfest im Gerätegehäuseteil gehalten, daß es einerseits an seinem einen Ende mit einem ihm angeformten Arm in eine Öffnung des Gerätegehäuseteils eingreift und andererseits an seinem gegenüberliegenden Ende durch einen am Griffteil angeformten Flansch, welcher seinerseits mit einer Nase in eine Öffnung des Gerätegehäuseteils eingreift, über den Arm in seiner Lage fixiert wird, wobei gleichzeitig das Griffteil über eine dem Flansch und dem Arm gegenüberliegende, axiale Führung wiederum mit dem Lagerteil in Eingriff steht. Durch diese erfindungsgemäße Anordnung wird zum einen über das Lagerteil der Motor im Gerätegehäuseteil zentriert und zum anderen hält sich der Griffteil am Lagerteil fest und drückt dieses durch die Einrastung im Gerätegehäuseteil gegen den Motor. Das Lagerteil und der Griffteil bilden demnach erst mit dem Gerätegehäuseteil einen festen Zusammenhang.

In vorteilhafter Weise ist der Motor an seinem einen, abtriebsseitigen Ende über ein elastisch federnd ausgebildetes Lager axial verschiebbar im Gerätegehäuseteil aufgenommen, der sich an seinem anderen Ende in dem Lagerteil abstützt und der über die am Lagerteil ausgebildeten Rastelemente und über die am Griffteil angeformten Rastelemente im Gerätegehäuseteil und dem Griffteil federnd eingespannt ist. Dabei werden die Bauteile axial so weit verschoben, bis die entsprechenden Rastelemente in ihre Rastposition gebracht worden sind. Durch die federnde Einspannung des Motors wird ferner ein Festklemmen der Rastelemente herbeigeführt, so daß diese nur durch Niederdrücken des Lagerteils gegen das Gummilager aus ihrer, die Bauteile sichernden Stellung herausverstellt werden können. Da das Gerätegehäuseteil, das Griffteil, das Lagerteil, der Deckel und die Schaltwippe aus Kunststoff hergestellt sind, ist es ohne weiteres möglich, derartige Rastelemente an diesen Teilen mit anzuformen. Hierdurch wird die Herstellung der einzelnen Bauteile nicht aufwendiger und teuerer.

Es ist vorteilhaft, daß das Lagerteil an seinem dem Motor angrenzenden Abschnitt ein topfartiges, den Motor zentrierendes Aufnahmeteil aufweist, an dem ein sich radial nach außen erstreckender, erster Arm angeordnet ist, der von einem am Griffteil vorgesehenen Vorsprung gegen die Kraft des elastischen Lagers in Einbaulage gehalten wird, daß das radial äußere Ende des Arms zur Zentrierung des Lagerteils an der Innenwand des Gerätegehäuseteils anliegt, und daß an dem am Aufnahmeteil gegenüberliegenden Ende am Lagerteil ein zweiter Arm in eine im Gerätegehäuseteil vorgesehene Öffnung einrastbar ist. Durch die am Lagerteil ausgebildeten Armen bzw. Vorsprünge wird das Lagerteil mittels des Griffteils im Gerätegehäuseteil ortsfest gehalten und zentriert, wodurch ebenfalls der Motor seine zentrale Lageposition endgültig einnimmt. Dabei weist der zweite Arm eine zum oberen Geräteende offene Nut auf, die zur Aufnahme der die Öffnung begrenzenden Stirnkante dient.

Zur Aufnahme, Zentrierung und Befestigung des Motors, der Schaltwippe und der Leiterplatte weist das Lagerteil eine Tragplatte auf, auf deren dem Motor zugewandten Seite das topfartige Aufnahmeteil hervorsteht, daß auf deren abgewandten Seite zwei aufrecht stehende, mit Abstand zueinander verlaufende, mit Schlitzöffnungen versehene Wandteile angeordnet sind, zwischen denen die Leiterplatte zur Aufnahme von elektrischen Bauteilen einschiebbar ist und daß die Wandteile an ihrem oberen Ende über ein Joch miteinander verbunden sind, so daß das Joch mit den Wänden und der Platte eine zur Aufnahme einer Schaltwippe dienende Öffnung bildet und gleichzeitig formstabil wird.

Eine besonders einfache Kontaktierurg der Leiterplatte mit den elektrischen Anschlüssen des Motors wird dadurch erreicht, daß die Leiterplatte zwei Kontaktfahnen aufweist, die mit der Leiterplatte in am Motor vorgesehene Schlitzöffnungen zur Stromversorgung von oben einschiebbar sind. Nachdem die Leiterplatte in dem Lagerteil und im Motor fixiert worden ist, läßt sich nunmehr der untere Gerätegehäuseteil durch Einsetzen des Griffteils zu einem geschlossenen Gehäuse vervollständigen. Hierzu weist der Griffteil zum Einschiehen in den Gerätegehäuseteil eine am Umfangsrand der Öffnung angeordnete Schlitzführung auf, die auf die Stirnkanten der entsprechenden Öffnung des Gerätegehaüseteils derart aufschiebbar ist, daß eine nahezu geschlossene Mantelfläche zwischen dem Gerätegehäuse und dem Griffteil entsteht.

Damit der Griffteil genau zu dem unteren Gerätegehäuseteil ausgerichtet werden kann, weist der Griffteil eine in etwa parallel zur Längsachse des Gerätes verlaufende Schwalbenschwanzführung auf, die auf einen an dem Lagerteil angeordneten Schwalbenschwanz aufschiebbar ist. Somit wird das Griffteil im unteren Bereich am Gerätegehäuseteil ortsfest und im oberen Bereich am Lagerteil radial gebunden. Zur Montage wird also vom Griffteil das Lagerteil gegen die Lagerkraft ein wenig nach unten verschoben, was aufgrund des elastischen Lagerteils möglich ist, bis die Nase des Griffteils in die Aussparung im Gerätegehäuseteil einrasten kann.

Dabei legt sich der seitlich herausstehende Arm des Lagerteiles gegen die untere Seite der Nase des Griffteils an und fixiert diese zusätzlich radial nach außen.

Zur einfachen Aufnahme und Befestigung des Anschlußkabels ist in einer Weiterbildung der Erfindung vorgesehen, daß der Griffteil an seinem dem Motor abgewandten Ende in einer Öffnung eine Aussparung in Form eines Labyrinths aufweist, das zur Aufnahme und Befestigung des motorseitigen Endes eines elektrischen Kabels dient. Dabei wird das Kabel über eine seitlich am Griffteil ausgebildete Bohrung nach außen geführt.

Nach der Montage des Griffteils läßt sich nunmehr in die obere kreisrunde Öffnung des Griffteils ein Deckel einsetzen, der hierzu in vorteilhafter Weise mit zwei an seiner Unterseite gegenüberliegenden Haken versehen ist, wobei die Haken zwischen den Wandteilen des Lagerteils und den Wandteilen des das Labyrinth bildenden Kabelgehäuses so weit einschiebbar sind, bis die Haken den die Wandteile verbindenden Boden einrastend hintergreifen und daß die Stege am Deckel gleichzeitig durch die an den Haken außen bzw. innen anliegenden Wandteilen seitlich geführt werden. Dabei drücken beim Einsetzen des Deckels in die Öffnung des Griffteils die mit den Haken versehenen Stege endseitig die am Lagerteil vorgesehenen Vorsprünge soweit radial nach außen, daß sie mit den am Griffteil vorgesehenen Vorsprüngen derart zusammenwirken, daß das Griffteil nach oben nicht mehr herausnehmbar ist. Hierdurch wird auf einfache Weise der Deckel am Griffteil ortsfest gesichert, ohne daß ein Schraubenelement erforderlich ist.

Abschließend läßt sich noch der Wippschalter mit Bolzen schwenkbar am Wandteil des Gerätegehäuseteils anbauen. Dabei ist es vorteilhaft, daß gegenüber dem Griffteil im Lagerteil und/oder im Gerätegehäuseteil eine weitere Öffnung zur Aufnahme einer Schaltwippe vorgesehen ist, die mittels zweier gegenüberliegender Zapfen in Bohrungen schwenkbar im Lagerteil gelagert ist, wobei an dem den Zapfen gegenüberliegenden Ende der Schaltwippe eine die Rückwand des Labyrinths hintergreifende Nase vorgesehen ist, die die Drehbewegung der Schaltwippe nach außen begrenzt. Es ist selbstverständlich auch möglich, daß die Zapfen an der Schaltwippe und die Bohrungen am Lagerteil ausgebildet sind. Nach dem Einbau der Schaltwippe sind nunmehr alle Teile im Gerät gesichert, ohne daß hierzu Schraubverbindungen erforderlich waren.

Eine Demontage des Handmixgerätes ist nur dann möglich, wenn zunächst die Schaltwippe entfernt wird und anschließend der Deckel durch Aufweiten der Haken nach oben entfernt wird. Alle anderen Teile lassen sich dann in umgekehrter Reihenfolge, wie oben beschrieben, demontieren.

Im folgenden wird die Erfindung anhand eines Ausführungsbeispiels in der Zeichnung näher erläutert. Es zeigen:
- Fig.1a und 1b: eine Längsschnittdarstellung eines Mixgerätes nach der Erfindung, dessen Schneid- oder Mixwerkzeug über einen elektrischen Motor angetrieben wird, wobei in Fig. 1a der obere und in Fig. 1b der untere Teil des Mixgerätes dargestellt ist;
- Fig. 2: die einzelnen elektrischen und mechanischen Teile des Mixgerätes in Seitenansicht dargestellt, wobei die Teile in auseinandergezogener Darstellung gezeigt sind;
- Fig. 3: eine Schnittdarstellung des oberen Teils des Gerätes gemäß der Schnittführung III-III in Fig. 1a, und
- Fig. 4: eine Schnittdarstellung des oberen Teils des Gerätes entlang der Schnittführung IV-IV gemäß Fig. 3.

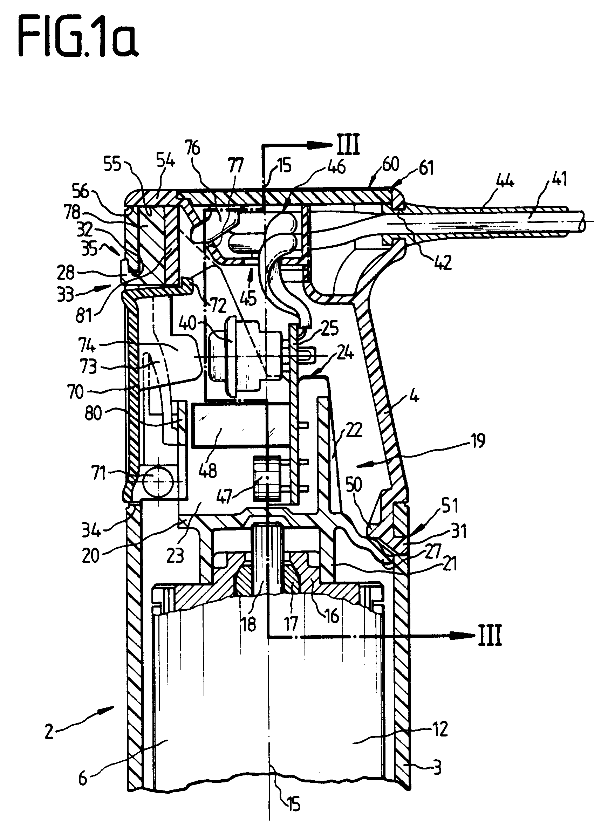

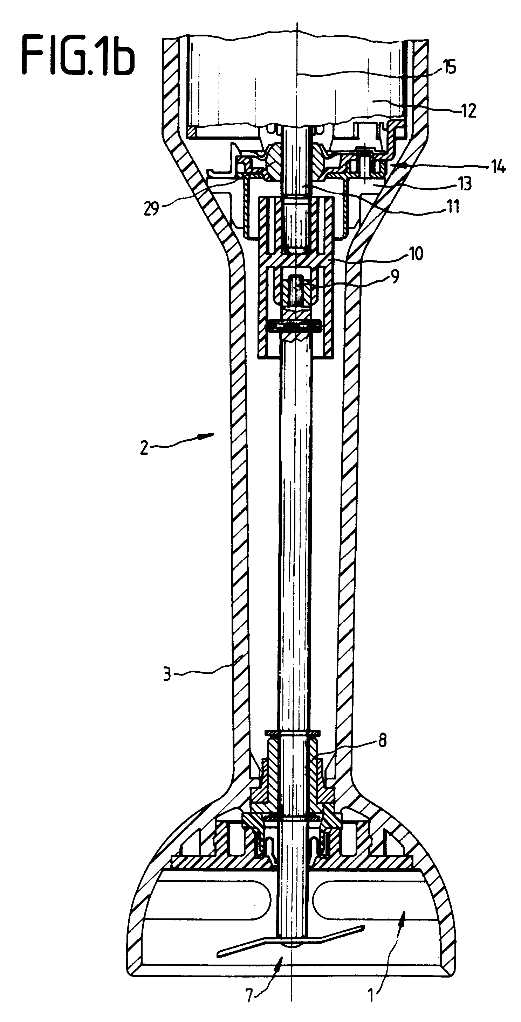

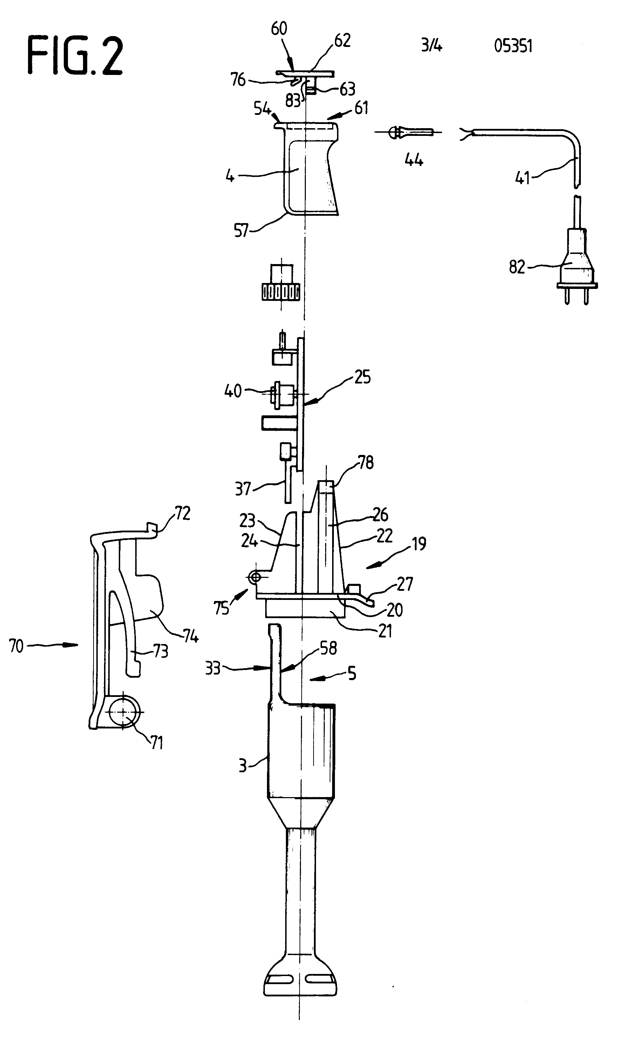

In der Zeichnung ist in Fig. 1a und 1b entlang der Längsachse 15 das Mixgerät 2 dargestellt, das aus einem unteren, stabförmigen Gerätegehäuseteil 3 (Fig. 1b) und einem oberen Griffteil 4 (Fig. 1a) besteht, der in einer am Gerätegehäuseteil 3 vorgesehene Aussparung 5 (Fig. 2) einsetzbar ist. Das Gerätegehäuseteil 3 ist, wie aus Fig. 1b hervorgeht, in der Zeichnung im unteren Abschnitt hohlförmig ausgebildet und verjüngt sich nach unten hin, wobei in dem unteren Teil des Gerätegehäuseteils 3 in einer nach unten hin offenen, sich erweiternden, glockenförmigen Ausnehmung 1 ein Mixstab 7 drehbar gelagert ist, der hierzu im unteren Bereich in einem Gleitlager 8 aufgenommen ist. Das obere Ende 9 des Mixstabes 7 steht über eine Kupplung 10 mit einer Welle 11 eines im Gerätegehäuseteil aufgenommenen Motors 12 in Antriebsverbindung. Das untere Lagerende 14 des Motors ist in einem axial elastisch verformbaren Lager 13 aufgenommen.

Das in der Zeichnung gemäß Fig. 1a obere Ende des Motors 12 weist einen zylindrischen Ansatz 16 auf, der mit dem Gehäuse 6 des Motors 12 verbunden ist und der zur Aufnahme eines Gleitlagers 17 dient, in dem die Welle 18 des nicht weiter dargestellten Rotors drehbar aufgenommen ist. Ebenso ist am unteren Lagerende 14 ein weiteres Gleitlager 29 zur Zentrierung und Lagerung des Rotors ausgebildet. Auf dem Außenumfang des zylindrischen Ansatzes 16 sitzt das Lagerteil 19, das, wie aus den Fig. 1a, 2 und 3 hervorgeht, aus einer Tragplatte 20 besteht, an deren Unterseite ein topfartiges Aufnahmeteil 21 und auf deren Oberseite mit Abstand zueinander angeordnete Wandteile 22 und 23, die an ihrem oberen Ende über ein Joch 78 miteinander verbunden sind, angeordnet sind, wobei die Wandteile 22, 23 eine Schlitzöffnung 24 (Fig. 2) zur Aufnahme einer Leiterplatte 25 bilden. Das rechte Wandteil 22 ist zusätzlich durch Streben 26 mit der Tragplatte 20 verbunden. Das Lagerteil 19 sitzt mit seinem topfartigen Aufnahmeteil 21 auf dem zylindrischen Ansatz 16 des Motors 12. Zur seitlichen und axialen Fixierung ist die Tragplatte 20 mit einem Arm 27 (Fig. 1a und 2) ausgestattet, der unterhalb einer am Griffteil 4 vorgesehenen Nase 31 - wie nachfolgend beschrieben - zur Anlage kommt.

Das Lagerteil 19 weist am oberen Ende des Wandteils 23 einen weiteren Arm 28 (Fig. 1a) auf, der die untere Stirnkante 32 des Gerätegehäuseteils 3 hintergreift, wenn das Lagerteil 19 hierzu etwas nach unten gegen das elastische Lager 13 (Fig. 1b) gedrückt wird und wenn dabei der Arm 28 mit seiner Nut 35 in die im Gerätegehäuseteil 3 vorgesehene Öffnung 33 hindurchgeführt wird. Hierdurch wird der Motor 12 mittels des Lagerteils 19 in axialer sowie in radialer Richtung unter Vorspannung fixiert, während im unteren Bereich das Lagerteil 19 und der Motor 12 aufgrund der noch fehlenden, nach unten gerichteten Andrückkraft - diese erfolgt später durch den Flansch 50 auf den Arm 27 - nach rechts wegschwenken will (Fig. 1a).

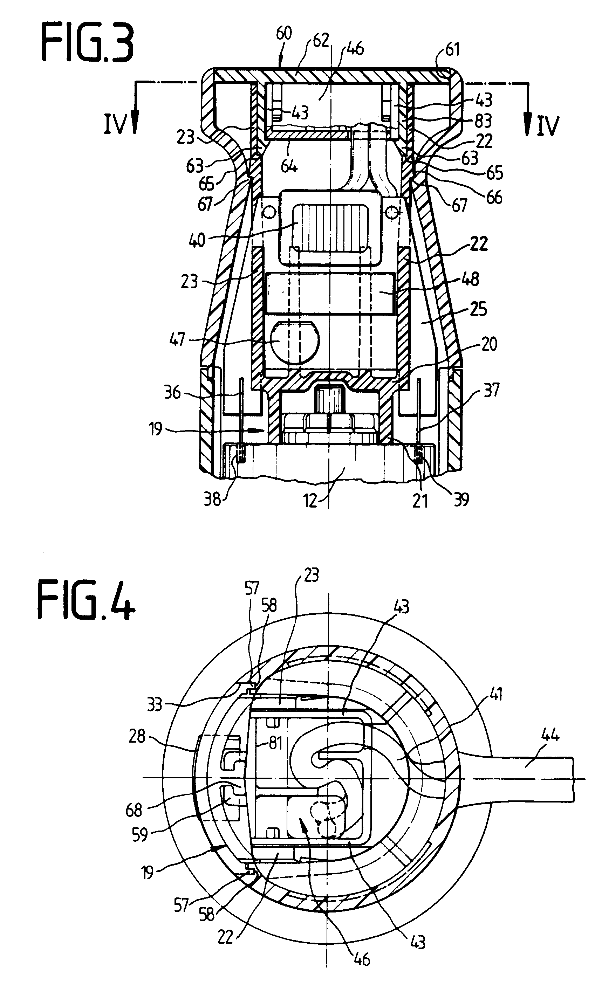

Nach Montage des Lagerteils 19 läßt sich von oben in die Schlitzöffnung 24 (siehe Fig. 2 und 3) die Leiterplatte 25 einschieben. Die Leiterplatte 25 weist an ihrem unteren Ende zwei mit Abstand zueinander angeordnete Kontaktfahnen 36 und 37 auf, die in am oberen Ende des Motors 12 vorgesehene Schlitzöffnungen 38 und 39 (Fig. 3) eingeführt werden, wenn die Leiterplatte 25 in die Schlitzöffung 24 eingeschoben wird. Über die beiden Kontaktfahnen 36 und 37 erfolgt die Stromversorgung zum Motor 12. Die Kontaktfahnen 36 und 37 stehen über in der Zeichnung nicht dargestellte elektrische Leiterbahnen mit einem auf der Leiterplatte 25 vorgesehenen Schalter 40 in Verbindung, der über ein elektrisches Kabel 41 und einem am Kabelende befestigten Stecker 82 mit Strom versorgt wird. Am Ausgang des Gerätes 2 ist das Kabel 41 mit einer Kabelverstärkung 44 ausgestattet ist, die in einer kreisrunden Aussparung 42 des Griffteils 4 ortsfest aufgenommen ist. Das Kabel 41 ist ferner in einem Labyrinth 46 (Fig. 4) aufgenommen, das an seiner unteren Seite mit einer Bohrung 45 versehen ist, durch die das Kabel 41 nach unten zur Leiterplatte 25 geführt wird. Wie aus Fig. 4 hervorgeht, wird das Kabel 41 mittels des Labyrinths 46 im Griffteil 4 befestigt. Auf der Leiterplatte 25 sind ferner eine Diode 47, ein Kondensator 48 sowie weitere, im Detail nicht näher dargestellte elektronische Bauteile zur Regelung des Motors 12 angeordnet.

Nachdem die Leiterplatte 25 in der Schlitzöffnung 24 des Lagerteils 19 und in den Schlitzöffnungen 38, 39 des Motors 12 fixiert worden ist, läßt sich nun der Griffteil 4 mit dem Lagerteil 19 und mit dem Gerätegehäuseteil 3 verbinden. Beim Einführen des Griffteils 4 in die Aussparung 5 des Gerätegehäuseteils 3 wird zunächst die Schwalbenschwanzführung 59 in den Schwalbenschwanz 68 eingefädelt, so daß dann beim Herunterdrücken des Griffteils 4 die Schwalbenschwanzführung 59 in dem Schwalbenschwanz 68 entlanggleitet. Damit die Nase 31 vor dem Herunterdrücken des Griffteils 4 an der Innenwandung des Gerätegehäuseteils 3 anliegt, muß der Wandbereich des Griffteils 4 im Bereich der Nase 31 radial nach innen elastisch verformt bzw. verbogen werden. Beim Herunterdrücken des Lagerteils 19 wird nun der untere Flansch 50 nach Fig. 1a gegen den Arm 27 gedrückt, bis die untere Nase 31 des Griffteils 4 in die im Gerätegehäuseteil 3 vorgesehene Öffnung 51 federnd nach außen einrastet. Dabei wird nochmals der Motor 12 über das Lager 14 gegen das elastische Lager 13 geringfügig nach unten verschoben. Sobald die untere Nase 31 in der Öffnung 51 eingerastet ist, liegt das obere Flanschteil 54, das mit dem Labyrinth 46 verbunden ist, an der oberen Stirnkante 55 des Joches 78 und an der Stirnkante 56 des Gerätegehäuseteils 3 bündig an. In dieser Endstellung ist der Griffteil 4 über die Nase 31 und über die Schwalbenschwanzführung 59, 68 in radialer und axialer Lage ortsfest gesichert. Dadurch, daß beim Herunterdrücken des Griffteils 4 die Stirnkanten 58, die den Rand der Aussparung 5 des Gerätegehäuseteils begrenzen, in die Schlitzführung 57 einrasten, ist auch der Griffteil 4 am Übergang zum Gerätegehäuseteil fest an dieses gebunden.

Anschließend läßt sich der Deckel 60 in die obere Öffnung 61 des Griffteils 4 einsetzen. Wie aus den Fig. 2 und 3 hervorgeht, besteht der Deckel 60 aus einer horizontal verlaufenden, kreisförmigen Platte 62, an deren Unterseite an zwei mit Abstand zueinander angeordneten Stegen 83 Haken 63 angeformt sind. Die einander gegenüberliegenden Haken 63 untergreifen den Boden 64 des Labyrinths 46 in der in Fig. 3 dargestellten Stellung und sichern somit den Deckel 60 am Gerät 2. Gleichzeitig greift ein weiterer, am Boden 64 des Deckels 60 ausgebildeter Haken 76 in die am Labyrinth 46 hierfür vorgesehene Öffnung 77 ein (Fig. 1a). Durch den Haken 76 wird sichergestellt, daß der Deckel 60 immer die richtige Einbaulage einnimmt. Gleichzeitig verhindert der Haken 76 ein senkrechtes Herausheben des Deckels 60 nach oben. Der Deckel 60 läßt sich beim Herunterdrücken so weit nach unten verschieben, bis die Enden der Haken 63 an den Vorsprüngen 65 anschlagen, die in den Wandteilen 22, 23 des Lagerteils 19 vorgesehen sind. Durch Einsetzen des Deckels 60 werden auch die Wandteile 22, 23 radial nach außen gedrückt, bis die Vorsprünge 66 des Lagerteils 19 in die Vorsprünge 67 des Griffteils 4 eingreifen. Hierdurch wird der Griffteil 4 zusätzlich nach oben gesichert. Durch die Wandteile 43 am Labyrinth 46 und die Stege 83 am Deckel 60 werden die Wand teile 22, 23 auf genauen Abstand zueinander gehalten, so daß die Vorsprünge 66, 67 stets ineinandergreifen. Hierdurch wird eine zusätzliche axiale Sicherung des Griffteils 4 immer eingehalten.

Wie aus Fig. 1a hervorgeht, wird die zur Aufnahme der Schaltwippe 70 vorgesehene Öffnung 33 ferner durch eine untere Stirnkante 34 begrenzt.

Abschließend läßt sich die Schaltwippe 70 in die im Gerätegehäuseteil 3 vorgesehene Öffnung 33 einsetzen. Hierzu wird zunächst der obere Schaltwippenteil in die Öffnung 33 eingeführt, bis die Nase 72 die Rückwand 81, wie aus Fig. 1a ersichtlich, hintergreift. Anschließend werden die Wandteile 22, 23 des Lagerteils 19 soweit zueinander gebogen, bis die an den Wandteilen 22, 23 angeformten Zapfen 75 in die Öffnung 33 eingleiten und in die an der Schaltwippe 70 vorgesehenen Bohrungen 71 einrasten. In dieser Stellung gemäß Fig. 1a ist die Schaltwippe 70 fixiert, so daß beim Betätigen der Schaltwippe 70, d.h., durch Verschwenken dieser um die Zapfen 75, der Nocken 74 gegen den Schalter 40 zur Anlage gebracht wird. Die an der Schaltwippe 70 angeformte Feder 73 stützt sich federnd am Wandteil 80 des Lagerteils 19 ab, so daß die Schaltwippe 70 selbsttätig in ihre in Fig. 1a dargestellte Ausgangsposition, d.h., bis die Nase 72 an der Rückwand 81 anschlägt, zurückschwenkt.

Aus dem Vorstehenden ergibt sich, daß sämtliche Bauteile des Mixgerätes 2 miteinander derart durch Arretierungelemente, Haken oder Vorsprünge gesichert sind, daß keine zusätzlichen Verbindungselemente, wie Schrauben, Muttern, Klebverbindungen, etc. notwendig sind. In vorteilhafter Weise sind die in das Mixgerät 2 eingebauten Teile jeweils miteinander wirkungsmäßig derart verbunden, daß sie sich immer gegenseitig sichern und somit die Lage der einzelnen Teile im Gerätegehäuseteil 3 festlegen. Hierdurch wird eine erhebliche Verbilligung und eine Vereinfachung der Montage des Handmixgerätes 2 erreicht. Eine derartig einfache Konstruktion eignet sich besonders zur schnellen Montage am Fließband.

Die Demontage der einzelnen Teile erfolgt in der umgekehrten Reihenfolge. Zuerst werden die Zapfen 75 der Schaltwippe 70 mit einem flachen Gegenstand, der in den Schlitz zwischen der Schaltwippe 70 und dem Rand der Öffnung 33 eingeführt wird, so weit auseinandergedrückt, bis die Bohrungen 71 aus den Zapfen 75 herausgleiten und die Schaltwippe 70 von unten her aus der Öffnung 33 entfernt werden kann.

Die nunmehr freigewordene Öffnung 33 ermöglicht einen Zugang zu den beiden Haken 63 des Deckels 60. Die Haken 63 werden nunmehr etwas nach außen gebogen, bis sie den Boden 64 freigeben und der Deckel 60 nach oben aus der Öffnung 61 entfernt werden kann, wobei die Haken 63 an der Außenseite der Wandteile 43 des Labyrinths 46 entlanggleiten. Nachdem der Deckel 60 entfernt worden ist, wird die rechte Seitenwand des Griffteils 4 im Bereich der Nase 31 nach innen gedrückt, so daß die Nase 31 aus der Öffnung 51 gleitet und nunmehr der Griffteil 4 nach oben aus dem Schwalbenschwanz 68 gezogen werden kann. Mit dem Griffteil 4 wird auch gleichzeitig die Leiterplatte 25, die über das Kabel 41 mit dem Griffteil 4 verbunden ist, nach oben aus der Schlitzführung 57 herausgezogen. Nach diesem Arbeitsgang wird die Nase 28 des Lagerteils 19 nach unten gedrückt und durch die Öffnung 33 des Griffteils 4 nach rechts verschoben, so daß das Lagerteil 19 nach oben entfernt werden kann. Abschließend kann der Motor 12 aus dem Gerätegehäuseteil 3 nach oben herausgenommen werden, da die Kupplung 10 mit axialem Spiel auf der Welle 11 des Rotors zentriert ist.

## Patentansprüche

1. Von Hand geführter Stabmixer (2) mit einem im wesentlichen zylindrisch ausgeführten, aus einem rohrförmigen Gerätegehäuseunterteil (3), einem Griffteil (4) und einem Deckel (60) zusammengesetzten Gehäuse, in dem zwischen einem unteren und einem oberen Lagerteil (14, 19) ein zum Antrieb eines Arbeitswerkzeuges (7) dienender Elektromotor (12) eingesetzt ist, der über im Griffteil (4) ausgebildete elektrische Bau- bzw. Schaltteile (25, 40, 41) steuerbar ist, wobei das obere Lagerteil (19) dem Griffteil (4) und das untere Lagerteil (14) dem Arbeitswerkzeug (7) zugewandt ist,
**dadurch gekennzeichnet,**
daß das Gerätegehäuseunterteil (3), der Elektromotor (12), das obere Lagerteil (19), das Griffteil (4) und der Deckel (60) jeweils mit Rastelementen (16, 21; 27, 50; 31, 51; 38, 28; 66, 67; 76, 77) versehen sind, daß das Gerätegehäuse, ausgehend vom Gerätegehäuseunterteil (3), schrittweise aus den vorgenannten Teilen (3, 12, 19, 4, 60) zusammengefügt wird, wobei im zusammengefügten Zustand der einzelnen Teile (3, 12, 19, 4, 60) jeweils ein Rastelement des vorangehenden Teils mit einem Rastelement des nachfolgenden Teils eine Verbindung der betreffenden Teile herstellt, und daß das obere Lagerteil (19) mittels der an ihm ausgebildeten Rastelemente (21, 27, 31, 28, 66, 68) eine Verbindung zum Gerätegehäuseunterteil (3), zum Elektromotor (12), zum Griffteil (4) und zum Deckel (60) herstellt.

2. Gerät nach Anspruch 1,
**dadurch gekennzeichnet,**
daß das Lagerteil (19) und das Griffteil (4) dadurch ortsfest am Gerätegehäuseunterteil (3) gehalten werden, daß das Lagerteil (19) zum einen an seinem einen Ende mit einem ihm angeformten Arm (28) in eine Öffnung (33) des Gerätegehäuse unterteils (3) eingreift und andererseits an seinem gegenüberliegenden Ende durch einen an dem Griffteil (4) angeformten Flansch (50), welcher seinerseits mit einer Nase (31) in eine Öffnung (51) des Gerätegehäuseteils (3) eingreift, über den Arm (27) in seiner Lage fixiert wird und daß das Griffteil (4) über eine dem Flansch (50) und dem Arm (27) gegenüberliegende, axiale Führung (59, 68) wiederum mit dem Lagerteil (19) in Eingriff steht.

3. Gerät nach Anspruch 1,
**dadurch gekennzeichnet,**
daß der Motor (12) am abtriebsseitigen Ende über ein elastisch federnd ausgebildetes Lager (13) axial verschiebbar im Gerätegehäuseunterteil (3) aufgenommen ist und sich an seinem anderen Ende in dem Lagerteil (19) abstützt, der über die am Lagerteil (19) ausgebildeten Rastelemente (28, 27) und über am Griffteil (4) angeformte Rastelemente (50, 31) im Gerätegehäuseunterteil (3) eingespannt ist.

4. Gerät nach Anspruch 3,
**dadurch gekennzeichnet,**
daß das Lagerteil (19) an seinem am Motor (12) angrenzenden Abschnitt ein topfartiges, den Motor (12) zentrierendes Aufnahmeteil (21) aufweist, an dem ein sich radial nach außen erstreckender erster Arm (27) angeordnet ist, der von einem am Griffteil (4) vorgesehenen Vorsprung (50) gegen die Kraft des elastischen Lagers (13) in Einbaulage gehalten wird, daß das radial äußere Ende des Arms (27) zur Zentrierung des Lagerteils (19) an der Innenwand des Gerätegehäuseunterteils (3) anliegt, und daß an dem am Aufnahmeteil (21) gegenüberliegenden Ende am Lagerteil (19) ein zweiter Arm (28) in eine im Gerätegehäuseteil (3) vorgesehene Öffnung (33) einrastbar ist.

5. Gerät nach Anspruch 4,
**dadurch gekennzeichnet,**
daß der zweite Arm (28) eine zum oberen Geräteende offene Nut (35) aufweist, die zur Aufnahme der die Öffnung (33) begrenzenden Stirnkante (32) dient.

6. Gerät nach Anspruch 1 und 3,
**dadurch gekennzeichnet,**
daß das Lagerteil (19) eine Tragplatte (20) aufweist, auf deren dem Motor (12) zugewandten Seite das topfartige Aufnahmeteil (21) hervorsteht, daß auf deren abgewandten Seite zwei aufrecht stehende, mit Abstand zueinander verlaufende, mit Schlitzöffnungen (24) versehene Wandteile (22, 23) angeordnet sind, zwischen denen eine Leiterplatte (25) zur Aufnahme von elektrischen Bauteilen einschiebbar ist und daß die Wandteile (22, 23) an ihrem oberen Ende über ein Joch (78) miteinander verbunden sind, so daß das Joch (78) mit den Wänden (22, 23) und der Platte (20) eine zur Aufnahme einer Schaltwippe (70) dienende Öffnung (33) bildet und gleichzeitig formstabil wird.

7. Gerät nach Anspruch 6,
**dadurch gekennzeichnet,**
daß die Leiterplatte (25) zwei Kontaktfahnen (36, 37) aufweist, die mit der Leiterplatte (25) in am Motor (12) vorgesehene Schlitzöffnungen (38, 39) zur Stromversorgung von oben einschiebbar sind.

8. Gerät nach Anspruch 1,
**dadurch gekennzeichnet,**
daß der Griffteil (4) zum Einschieben in das Gerätegehäuseunterteil (3) eine am Umfangsrand der Öffnung (33) angeordnete Schlitzführung (57) aufweist, die auf Stirnkanten (58) der entsprechenden Öffnung (33) des Gerätegehäuseunterteils (3) derart aufschiebbar ist, daß eine nahezu geschlossene Mantelfläche zwischen dem Gerätegehäuse (2) und dem Griffteil (4) entsteht.

9. Gerät nach Anspruch 1,
**dadurch gekennzeichnet,**
daß der Griffteil (4) eine in etwa parallel zur Längsachse (15) des Gerätes (2) verlaufende Schwalbenschwanzführung (59) aufweist, die auf einen an dem Lagerteil (19) angeordneten Schwalbenschwanz (68) aufschiebbar ist.

10. Gerät nach Anspruch 1,
**dadurch gekennzeichnet,**
daß der Griffteil (4) an seinem dem Motor (12) abgewandten Ende in einer Öffnung (61) eine Aussparung in Form eines Labyrinths (46) aufweist, das zur Aufnahme und Befestigung des motorseitigen Endes eines elektrischen Kabels (41) dient.

11. Gerät nach Anspruch 10,
**dadurch gekennzeichnet,**
daß das Kabel (41) über eine seitlich am Griffteil (4) ausgebildete Bohrung (42) nach außen geführt wird.

12. Gerät nach Anspruch 10,
**dadurch gekennzeichnet,**
daß in die Öffnung (61) ein an seiner Unterseite zwei Haken (63) aufweisender Deckel (60) einsetzbar ist, wobei die Haken (63) zwischen den Wandteilen (22, 23) des Lagerteils (19) und den Wandteilen (43) des das Labyrinth (46) bildenden Kabelgehäuses so weit einschiebbar sind, bis die Haken (63) den die Wandteile (43) verbindenden Boden (64) einrastend hintergreifen und daß die Stege (83) am Deckel (60) gleichzeitig durch die an den Haken (63) außen bzw. innen anliegenden Wandteile (22, 23 bzw. 43) seitlich geführt werden.

13. Gerät nach Anspruch 12,
**dadurch gekennzeichnet,**
daß beim Einsetzen des Deckels (60) in die Öffnung (61) des Griffteils (4) die mit den Haken (63) versehenen Stege (83) endseitig die am Lagerteil (19) vorgesehenen Vorsprünge (65, 66) soweit radial nach außen drücken, daß sie mit den am Griffteil (4) vorgesehenen Vorsprüngen (67) derart zusammenwirken, daß das Griffteil (4) nach oben nicht mehr herausnehmbar ist.

14. Gerät nach Anspruch 1,
**dadurch gekennzeichnet,**
daß gegenüber dem Griffteil (4) im Gerätegehäuseunterteil (3) eine weitere Öffnung (33) zur Aufnahme einer Schaltwippe (70) vorgesehen ist, die mittels zweier im Lagerteil (19) gegenüberliegender Zapfen (75) in Bohrungen (71) der Schaltwippe (70) schwenkbar im Lagerteil (19) gelagert ist, wobei an dem dem Zapfen (75) gegenüberliegenden Ende der Schaltwippe (70) eine die Rückwand (81) des Labyrinths (46) hintergreifende Nase (72) vorgesehen ist, die die Drehbewegung der Schaltwippe (70) nach außen begrenzt.

15. Gerät nach Anspruch 14,
**dadurch gekennzeichnet,**
daß die Schaltwippe (70) ein Federelement (73) trägt, das endseitig gegen ein Wandteil (80) des Lagerteils (19) anliegt und die Schaltwippe (70) in ihre Ausgangsstellung federnd zurückdrückt.

16. Gerät nach Anspruch 15,
**dadurch gekennzeichnet,**
daß die Schaltwippe (70) aus Kunststoff hergestellt ist und daß das Federelement (73) aus zwei an die Schaltwippe (70) angeformten Federarmen besteht.

17. Verfahren zum Zusammenbau des Gerätes (2) nach den Ansprüchen 2, 5, 8, 9, 11, 13 und 16,
**dadurch gekennzeichnet,**
daß das Gerät (2) in folgenden Verfahrensschritten zusammengesetzt wird:
1. in das Gerätegehäuseunterteil (3), das als Grundkörper dient, wird der Motor (12) eingesetzt,
2. auf den am oberen Ende des Motors (12) vorgesehenen, zylindrischen Ansatz (16) wird das Lagerteil (19) aufgeschoben und der Motor (12) so weit gegen sein elastisches Lager (13) gedrückt, bis der am Lagerteil (19) vorgesehene zweite Arm (28) in die Im Gerätegehäuseunterteil (3) vorgesehene Öffnung (33) einrastet,
3. in die im Lagerteil (19) vorgesehene Schlitzöffnung (24) wird die Leiterplatte (25) eingeschoben, bis die an der Leiterplatte (25) vorgesehenen Kontaktfahnen (36, 37) in die am Motor (12) vorgesehenen Schlitze (38, 39) eingreifen und mit den Stromanschlüssen des Motors (12) in Stromverbindung stehen;
4. der Griffteil (4) wird mit seiner Schwalbenschwanzführung (59) auf den Schwalbenschwanz (68) des Lagerteils (19) und auf die vertikal verlaufenden Stirnkanten (58) des Gerätegehäuseteils (3) aufgeschoben, wobei der am unteren Ende des Griffteils (4) angeformte Flansch (50) gegen den radial herausstehenden erste Arm (27) des Lagerteils (19) soweit heruntergedrückt wird, bis die Nase (31) des Griffteils (4) in die am Gerätegehäuseteil (3) vorgesehene Öffnung (51) einrastet; dabei liegt der am Lagerteil (19) vorgesehene erste Arm (27) durch die im Lager (13) gebildete Vorspannkraft mit Vorspannung an dem am Griffteil (4) vorgesehenen Flansch (50) an und klemmt gleichzeitig die Nase (31) des Griffteiles (4) in der Aussparung (51) fest;
5. das Kabel (41) wird in die Bohrung (42) eingeführt und mit der Leiterplatte (25) verbunden; die Leiterplatte (25) und der Griffteil (4) können aber auch schon mit dem Kabel (41) vormontiert sein;
6. der Deckel (60) mit seinen beiden gegenüberliegenden Haken (63) wird in die zylindrische, obere Öffnung (61) des Griffteils (4) eingeschoben, bis die Hakenteile (63) den Boden (64) des Kabelgehäuses (43) hintergreifen und gleichzeitig die Vorsprünge (66, 67) mit dem Griffteil (4) und die Vorsprünge (65) mit den Enden der Haken (63) zusammenwirken;
7. abschließend wird die Schaltwippe (70) mit ihren Bohrungen (71) in die hierfür vorgesehenen Zapfen (75) am Lagerteil (19) eingeknöpft; zuvor wird die Nase (72) durch ihre federelastische Ausbildung nach unten gedrückt und soweit in die Öffnung (33) eingeschoben, bis sie in Einbaulage nach oben schnappt und die Rückwand (81) hintergreift.

## Claims

1. A hand-held immersion blender (2) comprising a housing of essentially cylindrical configuration composed of a tubular housing lower portion (3), a handle portion (4) and a cover (60), in which an electric motor (12) serving to drive a processing tool (7) is mounted between a lower and an upper bearing structure (14, 19), the motor being controllable by electrical components or control means (25, 40, 41) provided in the handle portion (4), with the upper bearing structure (19) being proximate to the handle portion (4) and the lower bearing structure (14) being proximate to the processing tool (7),
**characterized in that** the housing lower portion (3), the electric motor (12), the upper bearing structure (19), the handle portion (4) and the cover (60) are each provided with respective engaging means (16, 21; 27, 50; 31, 51; 38, 28; 66, 67; 76, 77), that the appliance housing, starting with the housing lower portion (3), is assembled from the aforementioned parts (3, 12, 19, 4, 60) in successive steps, wherein in assembled condition of the individual parts (3, 12, 19, 4, 60), a complementary engaging means of the preceding part makes an engagement with a corresponding engaging means of the succeeding part to establish connection between the parts, and that the upper bearing structure (19) establishes a connection with the housing lower portion (3), the electric motor (12), the handle portion (4) and the cover (60) by means of the engaging means (21, 27, 31, 28, 66, 68) provided thereon.

2. The appliance as claimed in claim 1,
**characterized in that** the bearing structure (19) and the handle portion (4) are fixedly secured to the housing lower portion (3) in that the bearing structure (19) has an arm (28) integrally formed thereon to make an engagement with an opening (33) in the housing lower portion (3) at its one end, while at its opposite end it is located in position by an arm (27) engaging a flange (50) integrally formed on the handle portion (4), the flange in turn having a nose (31) engaging in an opening (51) of the housing portion (3), and that the handle portion (4) is in turn in engagement with the bearing structure (19) by an axial guiding means (59, 68) disposed opposite the flange (50) and the arm (27).

3. The appliance as claimed in claim 1,
**characterized in that** the motor (12) has its driven end axially slidably received in the housing lower portion (3) through a resilient bearing (13), while its other end takes support on the bearing structure (19) secured in tension in the housing lower portion (3) by the engaging means (28, 27) provided on the bearing structure (19) and by engaging means (50, 31) integrally formed on the handle portion (4).

4. The appliance as claimed in claim 3,
**characterized in that** the bearing structure (19) has at its section adjacent to the motor (12) a cup-shaped receptacle (21) which locates the motor (12) centrally and has a radially outwardly extending first arm (27) held in mounting position against the force of the resilient bearing (13) by a projection (50) provided on the handle portion (4), that the radially outer end of the arm (27) abuts the inner wall of the housing lower portion (3) for centrally locating the bearing structure (19), and that a second arm (28) provided on the bearing structure (19) at the end opposite the receptacle (21) is adapted to engage in an opening (33) provided in the housing portion (3).

5. The appliance as claimed in claim 4,
**characterized in that** the second arm (28) has a groove (35) open towards the upper end of the appliance and serving to receive the front edge (32) bounding the opening (33).

6. The appliance as claimed in claims 1 and 3,
**characterized in that** the bearing structure (19) includes a supporting plate (20) from whose side proximate to the motor (12) the cup-shaped receptacle (21) projects, that on its side remote from the motor two relatively spaced upright wall parts (22, 23) are arranged having slotted openings (24) and adapted to receive therebetween a printed circuit board (25) on which electrical components are mounted, and that the wall parts (22, 23) have their upper ends interconnected by a yoke (78), such that the yoke (78), in combination with the walls (22, 23) and the supporting plate (20), provides an opening (33) for receiving a rocker control (70), affording at the same time an inherently stable structure.

7. The appliance as claimed in claim 6,
**characterized in that** the printed circuit board (25) is provided with two contact lugs (36, 37) for current supply which are insertable together with the printed circuit board (25) down into slotted openings (38, 39) provided in the motor (12).

8. The appliance as claimed in claim 1,
**characterized in that** the handle portion (4) includes for insertion into the housing lower portion (3) a slotted guide (57) provided on the peripheral rim of the opening (33), which guide is adapted to be slipped onto front edges (58) of the corresponding opening (33) of the housing lower portion (3) in such fashion that a nearly enclosed circumferential surface is obtained between the appliance housing (2) and the handle portion (4).

9. The appliance as claimed in claim 1,
**characterized in that** the handle portion (4) includes a dovetail guide (59) extending approximately parallel to the longitudinal axis (15) of the appliance (2) and being adapted to be slipped onto a dovetail (68) disposed on the bearing structure (19).

10. The appliance as claimed in claim 1,
**characterized in that** the handle portion (4) has in an opening (61) at its end remote from the motor (12) a clearance in the form of a labyrinth (46) which serves to receive and fasten the motor-side end of an electrical power cord (41).

11. The appliance as claimed in claim 10,
**characterized in that** the cord (41) is run to the outside through a bore (42) provided laterally of the handle portion (4).

12. The appliance as claimed in claim 10,
**characterized in that** a cover (60) having two hooks (63) on its underside is adapted to be inserted into the opening (61), the hooks (63) being adapted to be introduced between the wall parts (22, 23) of the bearing structure (19) and the wall parts (43) of the cord housing forming the labyrinth (46) until the hooks (63) are in locking engagement with the underside of the bottom (64) connecting the wall parts (43), and that at the same time the extensions (83) on the cover (60) are laterally guided by the wall parts (22, 23 and, respectively 43) abutting the hooks (63) outwardly and, respectively, inwardly.

13. The appliance as claimed in claim 12,
**characterized in that,** on insertion of the cover (60) into the opening (61) of the handle portion (4), the ends of the extensions (83) provided with the hooks (63) urge the projections (65, 66) disposed on the bearing structure (19) radially outwardly until they cooperate with the projections (67) provided on the handle portion (4) in such a manner that the handle portion (4) is no longer upwardly removable.

14. The appliance as claimed in claim 1,
**characterized in that** a further opening (33) for receiving a rocker control (70) is provided in the housing lower portion (3) opposite the handle portion (4), the rocker control being pivoted to the bearing structure (19) by means of two opposite pivot pins (75) in the bearing structure (19) carried in bores (71) in the rocker control (70), with a nose (72) rearwardly engaging the rear wall (81) of the labyrinth (46) being provided at the end of the rocker control (70) opposite the pivot pin (75), the nose limiting the rotational movement of the rocker control (70) in outward direction.

15. The appliance as claimed in claim 14,
**characterized in that** the rocker control (70) carries a spring element (73) bearing with its one end against a wall part (80) of the bearing structure (19) and resiliently urging the rocker control (70) back into its initial position.

16. The appliance as claimed in claim 15,
**characterized in that** the rocker control (70) is made of a plastic material and that the spring element (73) is comprised of two spring arms integrally formed with the rocker control (70).

17. A method of assembling the appliance (2) as claimed in claims 2, 5, 8, 9, 11, 13 and 16,
**characterized in that** the appliance (2) is assembled in the following sequence of operations:
1. The motor (12) is inserted into the housing lower portion (3) serving as base body;
2. the bearing structure (19) is pushed onto the cylindrical shoulder (16) provided at the upper end of the motor (12), and the motor (12) is urged against its resilient bearing (13) until the second arm (28) provided on the bearing structure (19) locks into the opening (33) provided in the housing lower portion (3);
3. the printed circuit board (25) is introduced into the slotted opening (24) provided in the bearing structure (19) until the contact lugs (36, 37) provided on the printed circuit board (25) engage the slots (38, 39) provided on the motor (12) and are in electrical connection with the electrical leads of the motor (12);
4. the handle portion (4) is pushed with its dovetail guide (59) onto the dovetail (68) of the bearing structure (19) and onto the vertically extending front edges (58) of the housing portion (3), with the flange (50) integrally formed on the lower end of the handle portion (4) being urged down against the radially protruding first arm (27) of the bearing structure (19) until the nose (31) of the handle portion (4) snaps into the opening (51) provided on the housing portion (3); as this occurs, the first arm (27) provided on the bearing structure (19) is biased into abutment with the flange (50) provided on the handle portion (4) by the biasing force produced in the bearing (13), securely wedging at the same time the nose (31) of the handle portion (4) within the opening (51);
5. the cord (41) is introduced into the bore (42) and connected with the printed circuit board (25); alternatively, the printed circuit board (25) and the handle portion (4) may be pre-assembled with the cord (41);
6. the cover (60) with its two opposed hooks (63) is inserted into the upper cylindrical opening (61) of the handle portion (4) until the hooks (63) engage the underside of the bottom (64) of the cord casing (43), while at the same time the projections (66, 67) are in cooperative relationship with the handle portion (4), and the projections (65) cooperate with the ends of the hooks (63);
7. finally, the rocker control (70) with its bores (71) is made to engage the pivot pins (75) provided on the bearing structure (19) for this purpose; prior to this operation, the nose (72) is urged downwardly on account of its resilient configuration and pushed into the opening (33) until it snaps upwardly in its mounting position, rearwardly engaging the rear wall (81).

## Revendications

1. Mixer à main (2), en forme de bâton, avec un boîtier sensiblement cylindrique composé d'une partie d'appareil inférieure tubulaire (3), d'une partie-poignée (4) et d'un couvercle (60), boîtier dans lequel est inséré, entre une partie-palier inférieure et une partie-palier supérieure (14, 19), un moteur électrique (12) servant à entraîner un outil de travail (7), ce moteur pouvant être commandé par des éléments de commande et des composants électriques (25, 40, 41) aménagés dans la partie-poignée (4), la partie-palier supérieure (19) étant tournée vers la partie-poignée (4) et la partie-palier inférieure (14) étant tournée vers l'outil de travail (7),
caractérisé
par le fait que la partie-boîtier inférieure (3) de l'appareil, le moteur électrique (12), la partie-palier supérieure (19), la partie-poignée (4) et le couvercle (60) sont munis chacun d'éléments de verrouillage par enclenchement (16, 21; 27, 50; 31, 51; 38, 28; 66, 67; 76, 77), par le fait que le boîtier de l'appareil est assemblé par étapes, à partir des parties précitées (3, 12, 19, 4, 60), en partant de la partie-boîtier inférieure (3) de l'appareil, un élément de verrouillage par enclenchement de chaque partie précédente établissant à chaque fois, avec un élément de verrouillage par enclenchement de la partie suivante, une liaison des parties concernées lorsque les diverses parties (3, 12, 19, 4, 60) sont à l'état assemblé, et par le fait que la partie-palier supérieure (19) établit, au moyen d'éléments de verrouillage par enclenchement (21, 27, 31, 28, 66, 68) aménagés sur elle, une liaison à la partie-boîtier inférieure (3) de l'appareil, au moteur électrique (12), à la partie-poignée (4) et au couvercle (60).

2. Appareil selon revendication 1,
caractérisé
par le fait que la partie palier (19) et la partie poignée (4) sont maintenues à poste fixe sur la partie-boîtier inférieure (3) de l'appareil par le fait que la partie-palier (19) s'engage d'une part, en sa première extrémité, par un bras (28) formé sur elle, dans une ouverture (33) de la partie-boîtier inférieure (3) de l'appareil et, d'autre part, en son extrémité opposée, est fixé dans sa position par le bras (27), au moyen d'un rebord (50) formé sur la partie poignée (4), lequel s'engage pour sa part, par un nez (31), dans une ouverture (51) de la partie-boîtier (3) de l'appareil, et par le fait que la partie-poignée (4) est elle-même en prise avec la partie palier (19) par l'intermédiaire d'un guide axial (59, 69) en vis-à-vis du rebord (50) et du bras (27).

3. Appareil selon revendication 1,
caractérisé
par le fait qu'en son extrémité sortie, le moteur (12) est reçu avec possibilité de translation axiale dans la partie-boîtier inférieure (3) de l'appareil, cela par un palier (13) réalisé de manière à être élastique, et par le fait qu'en son autre extrémité, le moteur prend appui dans la partie-palier (19) qui est prise dans la partie-boîtier inférieure (3) de l'appareil par les éléments de verrouillage par enclenchement (28, 27) aménagés sur la partie-palier (19) et par des éléments de verrouillage par enclenchement (50, 31) formés sur la partie-poignée (4).

4. Appareil selon revendication 3,
caractérisé
par le fait que la partie-palier (19) présente, en sa partie jouxtant le moteur (12), une partie réceptrice ou partie femelle (21) en forme de pot, centrant le moteur (12), sur laquelle est agencé un premier bras (27) s'étendant radialement vers l'extérieur, lequel est maintenu en position de montage, contre la force du palier élastique (13), cela par un relief (50) prévu sur la partie-poignée (4), par le fait que l'extrémité radialement extérieure du bras (27) s'applique contre la paroi intérieure de la partie-boîtier inférieure (3) de l'appareil, cela pour le centrage de la partie-palier (19), et par le fait qu'à l'extrémité de la partie palier (19) à l'opposé de la partie réceptrice (21) un deuxième bras (28) peut être enclenché dans une ouverture (33) prévue dans la partie-paroi (3) de l'appareil.

5. Appareil selon revendication 4,
caractérisé
par le fait que le deuxième bras (28) présente une rainure (35) ouverte en direction de l'extrémité supérieure de l'appareil et servant à recevoir l'arête terminale (32) bordant l'ouverture (33).

6. Appareil selon revendications 1 et 3,
caractérisé
par le fait que la partie-palier (19) présente une plaque-support (20) sur le côté de laquelle tourné vers le moteur (12) déborde la partie réceptrice en forme de pot (21), par le fait que sur son autre côté sont agencées deux parties-parois (22, 23) dressées, s'étendant à distance l'une de l'autre et munies d'ouvertures en forme de fente (24), par le fait qu'une carte à circuit imprimé (25), apte à recevoir des composants électriques, peut être introduite entre lesdites parties-parois, et par le fait que ces dernières (22, 23) sont reliées l'une à l'autre, en leur extrémité supérieure, par un organe de liaison (78), de sorte que cet organe de liaison (78) forme avec les parois (22, 23) et avec la carte (20), une ouverture (33) servant à recevoir un organe basculant (70) pour interrupteur, et que cet organe se trouve en même temps doté de stabilité de forme.

7. Appareil selon revendication 6,
caractérisé
par le fait que la carte à circuit imprimé (25) présente deux languettes de contact (36, 37) qui, avec la carte à circuit imprimé (25), peuvent être introduites par le haut dans des ouvertures en forme de fente (38, 39) prévues sur le moteur (12), aux fins de fourniture de courant.

8. Appareil selon revendication 1,
caractérisé
par le fait que, pour l'introduction dans la partie-boîtier inférieure de l'appareil (3), la partie-poignée (4), présente un guide en forme de fente (57) agencé sur le bord du pourtour de l'ouverture (33), lequel guide peut être emboîté sur des arêtes terminales (58) de l'ouverture correspondante (33) de la partie-boîtier inférieure (3) de l'appareil, de manière qu'il en résulte une surface périphérique pratiquement fermée entre le boîtier (2) de l'appareil et la partie-poignée (4).

9. Appareil selon revendication 1,
caractérisé
par le fait que la partie-poignée (4) présente un guide (59) pour queue d'aronde s'étendant sensiblement parallèlement à l'axe longitudinal (15) de l'appareil (2) et pouvant être emboîté sur une queue d'aronde (68) agencée sur la partie palier (19).

10. Appareil selon revendication 1,
caractérisé
par le fait qu'en son extrémité éloignée du moteur (12), la partie-poignée présente, dans une ouverture (61), un évidement ayant la forme d'un labyrinthe (46) qui sert à recevoir et à fixer l'extrémité côté moteur d'un câble électrique (41).

11. Appareil selon revendication 10,
caractérisé
par le fait que le câble (41) va à l'extérieur en passant par un trou (42) aménagé latéralement sur la partie-poignée (4).

12. Appareil selon revendication 10,
caractérisé
par le fait qu'un couvercle (60) présentant deux crochets (63) sur son côté dessous peut être inséré dans l'ouverture (61), lesdits crochets (63) pouvant être introduits entre les parties-parois (22, 23) de la partie-palier (19) et les parties-parois (43) du logement de câble formant le labyrinthe (46), jusqu'à ce que les crochets (63) s'enclenchent et retiennent, par l'arrière, le fond (64) assemblant les parties-parois (43), et par le fait que les nervures (83) sur le couvercle (60) sont en même temps guidées latéralement par les parties-parois (22, 23; 43) s'appliquant respectivement extérieurement et intérieurement contre les crochets (63).

13. Appareil selon revendication 12,
caractérisé
par le fait que lors de l'insertion du couvercle (60) dans l'ouverture (61) de la partie-poignée (4), les nervures (83) munies des crochets (63) appuient radialement vers l'extérieur, par leur extrémité, les reliefs (65, 66) prévus sur la partie-palier (19), à un point tel qu'elles coopèrent avec les reliefs (67) prévus sur la partie-poignée (4) de manière que cette dernière ne puisse plus être enlevée vers le haut.

14. Appareil selon revendication 1,
caractérisé
par le fait qu'en vis-à-vis de la partie-poignée (4) il est prévu, dans la partie-boîtier inférieure (3) de l'appareil, une autre ouverture (33) pour recevoir un organe basculant (70) pour interrupteur, lequel est monté pivotant dans la partie-palier (19) au moyen de deux tourillons (75) opposés dans la partie-palier (19), dans des trous (71) de l'organe basculant (70), un nez (72) formant retenue derrière la paroi arrière (81) du labyrinthe (46) étant prévu à l'extrémité de l'organe basculant (70) opposée au tourillon (75), ce nez limitant le mouvement angulaire vers l'extérieur de l'organe basculant (70).

15. Appareil selon revendication 14,
caractérisé
par le fait que l'organe basculant (70) porte un élément élastique (73) qui, côté extrémité, s'applique contre une partie-paroi (80) de la partie palier (19) et repousse élastiquement l'organe basculant (70) à sa position initiale.

16. Appareil selon revendication 15,
caractérisé
par le fait que l'organe basculant (70) est réalisé en matière plastique et par le fait que l'élément élastique (73) est constitué de deux bras élastiques formés sur l'organe basculant (70).

17. Procédé d'assemblage de l'appareil (2) selon les revendications 2, 5, 8, 9, 11, 13 et 16,
caractérisé
par le fait que l'appareil (2) est assemblé au cours des étapes suivantes :
1. le moteur (12) est inséré dans la partie-boîtier inférieure (3) de l'appareil, laquelle sert de corps de base,
2. sur l'embout cylindrique (16) prévu à l'extrémité supérieure du moteur (12), on emboîte la partie-palier (19) et l'on appuie le moteur (12) contre son palier élastique (13) jusqu'à ce que le deuxième bras (28) prévu sur la partie-palier (19) s'enclenche dans l'ouverture (33) prévue dans la partie-boîtier inférieure (3) de l'appareil,
3. dans l'ouverture en forme de fente (24) prévue dans la partie-palier (19), on introduit la plaque à circuit imprimé (25), jusqu'à ce que les languettes de contact (36, 37) prévues sur cette carte à circuit imprimé (25) s'engagent dans les fentes (38, 39) prévues sur le moteur (12) et se trouvent en liaison électrique avec les organes de raccordement du moteur (12);
4. la partie-poignée (4) est emboîtée, avec son guide (59) pour queue d'aronde, sur la queue d'aronde (68) de la partie palier (19) et sur les arêtes terminales verticales (58) de la partie-boîtier (3) de l'appareil, le rebord (50) formé à l'extrémité inférieure de la partie-poignée (4) étant enfoncé contre le premier bras (27) de la partie-palier (19), ce bras débordant radialement, jusqu'à ce que le nez (31) de la partie-poignée (4) s'enclenche dans l'ouverture (51) prévue sur la partie-boîtier (3) de l'appareil; le premier bras (27) prévu sur la partie-palier (19) s'appliquant alors, du fait de la force de contrainte créée dans le palier (13), avec précontrainte contre le rebord (50) prévu sur la partie-poignée (4), et serrant simultanément, en l'immobilisant, le nez (31) de la partie-poignée (4) dans l'évidement (51);
5. le câble (41) est introduit dans le trou (42) et relié à la plaque à circuit imprimé (25), cette plaque (25) et la partie-poignée (4) pouvant toutefois aussi être déjà préassemblées avec le câble (41);
6. Le couvercle (60) avec ses deux crochets opposés (63) est introduit dans l'ouverture cylindrique supérieure (61) de la partie poignée (4), jusqu'à ce que les parties-crochets (63) se placent derrière le fond (64) du boîtier de câble (43) et qu'en même temps les reliefs (66, 67) coopèrent avec la partie-poignée (4) et les reliefs (65) avec les extrémités des crochets (63);
7. pour terminer, l'organe basculant (70) pour interrupteur est boutonné, avec ses trous (71), sur des tourillons (75) prévus à cette fin sur la partie palier (19); le nez (72) étant auparavant, grâce à sa configuration élastique, poussé vers le bas et enfoncé dans l'ouverture (33) jusqu'à ce qu'il s'enclenche vers le haut, en position de montage, et forme une retenue derrière la paroi arrière (81).
